# EUROPEAN PATENT SPECIFICATION

(11) **EP 2 784 224 B1**
(45) Date of publication and mention of the grant of the patent: **11.10.2017**
(21) Application number: 14168269.0
(22) Date of filing: 22.03.2011
(51) Int. Cl.: E02F 3/413, B66C 3/04, F16C 11/04

(54) **Severe duty grapple with tubular pivot**
Schwerlastgreifer mit rohrförmiger Achse
Grappin pour charges lourdes comportant un pivot tubulaire

(30) Priority: 22.03.2010 US 728669
(43) Date of publication of application: 01.10.2014
(62) Divisional of application: 11712392.7
(73) Proprietor: Genesis Attachments, LLC, Superior, WI 54880 (US)
(72) Inventor: Raihala, Daniel, J., Superior, WI Wisconsin 54880 (US)
(74) Representative: Gowshall, Jonathan Vallance

(56) References cited:
- CA-A1- 2 430 224
- JP-A- 2004 346 417
- US-A- 4 413 945
- US-A1- 2008 238 116
- US-B1- 7 207 610

## Description

### BACKGROUND OF THE INVENTION

This invention relates to backhoes, and more particularly, to an improved severe duty grapple with a tubular pivot.

Bulldozers, front-end loaders and trucks have long been used for road work, clearing brush, and demolition of condemned buildings. In the early 1970's, grapple assemblies on a backhoe boom were developed and have proved to be extremely valuable for a variety of uses, especially for building demolition. Grapple assemblies typically have a pivotal upper jaw and a fixed lower jaw. Grapples can be used for crushing, raking and loading of debris. Examples of such early grapples are disclosed in U.S. Patent Nos. 3,802,731; 4,017,114; 4,248,471; and 4,413,945.

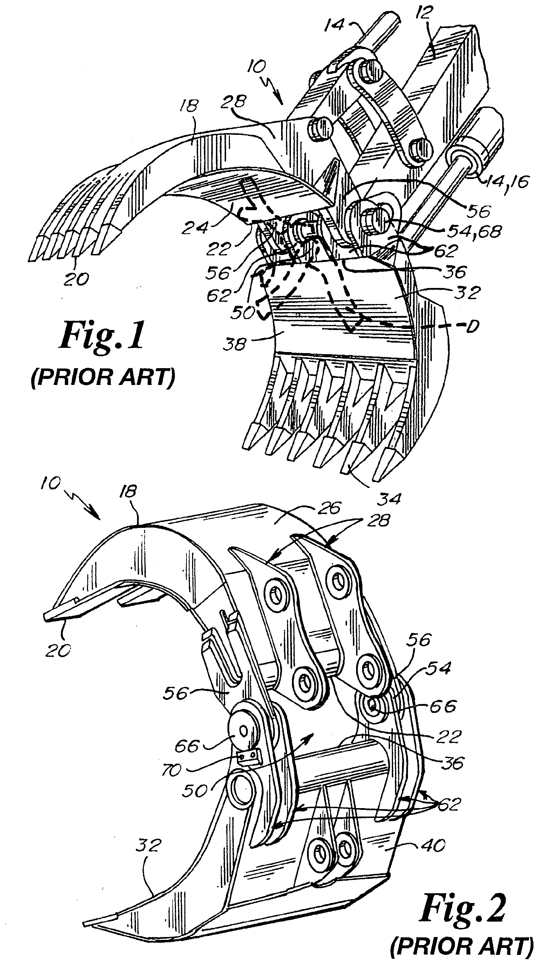

Over the years since the early 1970's, grapples have still pretty much remained the same and are illustrated in figures 1-3. Backhoe grapple assembly 10 is typically pivotally connected to the stick and further connected with the stick through actuators or cylinders 14 and optionally rigid linkages 16. Stick 12 is connected to the boom which is connected to the backhoe which would utilize a grapple.

Past grapple assemblies would typically include an arcuate-shaped upper jaw or clam shell 18 with rake tips 20 having a backside 26 with stick mount plates 28. Opposite the rake tips 20 is the inner end 22. Load engaging plates 24 are typically between the rake tips 20 and the inner end 22. A lower arcuate-shaped jaw or clam shell 32 similarly has rake tips 34 opposite from the inner end 36 in between which are located load engaging plates 38. On the backside 40 of the lower jaw 32 are stick mount plates 42. The stick mount plates 28 and 42 are suitably connected to the stick 12 of the backhoe and further connected by linkages with the cylinder 14 and linkage 16 or alternatively another cylinder 14 should the lower jaw 32 be desirably moveable.

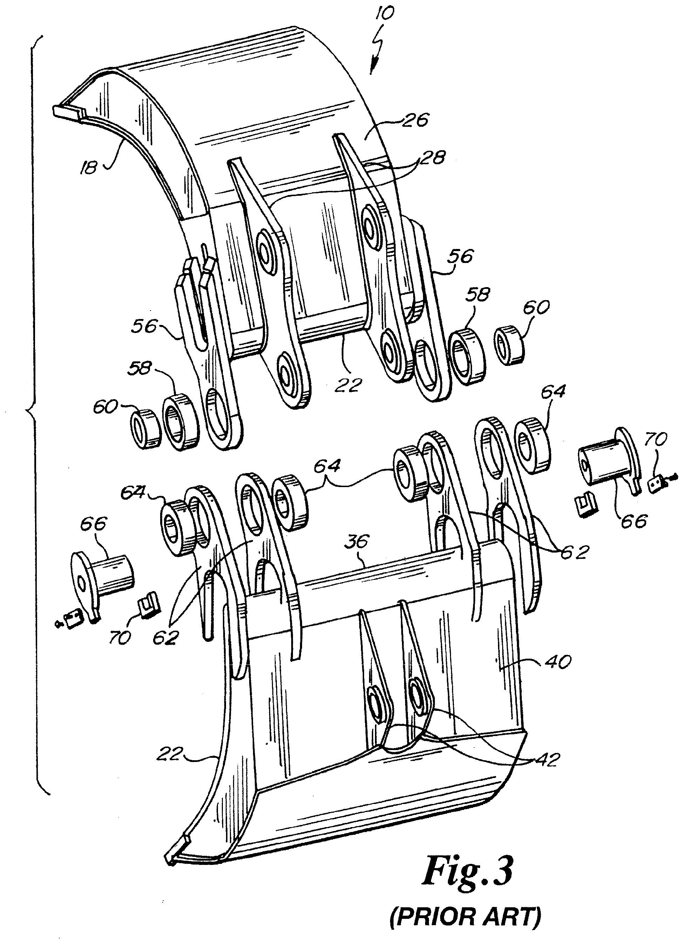

As can clearly be seen, prior backhoe grapple assemblies 10 have a substantially open throat 50. The upper jaw 18 suitably has two upper lug plates 56 with eyelets into which are welded two machined sleeves 58 into which are mounted 2 pivot bushings 60. On the lower jaw 32 are located 4 lower lug plates 62 with eyelets each having a welded machine sleeve 64 welded into each eyelet. Two pivot pins 66 are utilized in the prior grapple assemblies of figure 2 and 3 while a single pivot pin 68 may be utilized in the grapple assembly of figure 1. The pivot pins 68 or 66 are suitably held in place such as by a keeper 70.

The most significant problems with prior known grapple assemblies 10 is that the substantially open throat 50 allows debris D to get into the throat 50 to possibly abrade and cut into lug plates 56 and 62 as well as wear on pivot pin 66 or 68 and sometimes possibly nicking and damaging the rams of the actuators or cylinders 14 all of which can eventually render the grapple assembly 10 to be inoperative requiring replacement, rebuilding or significant repair.

Another significant problem is that the lug plates 56 and 62 of the upper and lower jaws 18 and 32 wear upon each other eventually causing significant slack and sloppiness in the operation of the jaws 18 and 32 with respect to each other. This also means that the grapple becomes extremely noisy with more wear during its operation.

Another significant disadvantage of past known grapple assemblies includes the multitude of parts to include 6 lug plates 56 and 62, and six machined sleeves 58 and 64 to be welded in place along with the associated wear of all of these parts.

There is a need for a severe duty grapple that will not utilize so many lug plates and machined sleeves that will have a substantially closed throat that will provide for extended operation without rebuilding in a smooth fashion with all of the stick mounts, lug plates, pivot pins being protected from damage caused by debris otherwise in an open throat 50.

US 4,413,945 discloses a grapple rake for a backhoe. The disclosure relates to an attachment for the dipper stick of a backhoe and more particularly relates to a grapple rake for mounting on the end of the dipper stick.

US 4,413,945 constitutes the basis for the preamble of independent claim 1.

### SUMMARY OF THE INVENTION

An improved severe duty grapple for attachment onto the end of a dipper stick of a backhoe has an arcuate-shaped upper jaw with an inner end and a backside. The upper jaw is pivotally attached near its inner end on its backside to the end of a dipper stick and a double action actuator or cylinder for operative pivotal movement of the upper jaw relative to the dipper stick. An arcuate-shaped lower jaw is provided with an inner end and a backside. The lower jaw is attached near its inner end on its backside to the dipper stick by a linkage for operative pivotal movement of the upper jaw relative to the lower jaw. A hollow tubular pivot is attached to the inner end of one of the jaws with open opposing ends. Two lug plates are mounted on the inner end of the other jaw each with an eyelet. The eyelets are alignable with the open ends of the tubular pivot. A pivot pin is passed through the tubular pivot and eyelets and secured thereat.

A principal object and advantage of the present invention is that the present grapple has less parts than prior grapple assemblies. That is, the present invention only has two lug plates instead of six lug plates of past known grapple assemblies.

Another object and advantage of the present invention is that the severe duty improved grapple has a substantially closed throat protecting the pivot groups, lug plates, pivot pins, linkages and cylinders from wear and tear of debris rubbing against these components.

Another object and advantage as a present invention is that its pivot group is much more rigid than previously hereto known and hence offers more long-term strength and durability over prior known grapple assemblies.

Another object and advantage of the present invention is that with less pivot group parts, the present invention is significantly cheaper to make and easier to maintain than previously known grapple assemblies.

Another object and advantage of the present invention is that the components of the upper and lower jaws are not touching each other to cause premature wear but rather are protected from each other by a unique pivot bushing and flange arrangement suitably made from manganese bronze.

Another object and advantage of the present invention is that its pivot group is much more rigid than previous grapple assemblies assuring a longer life, less noisy operation and greater strength capacity for crushing and demolition usage.

### BRIEF DESCRIPTION OF THE DRAWINGS

FIGURE 1 is a prior art view of a front perspective backhoe grapple assembly shown mounted on a dipper stick partially broken away.
FIGURE 2 is a rear perspective view of a prior art grapple assembly showing the open throat and six lug plates.
FIGURE 3 is an exploded view of the prior arc grapple assemblies showing the multitude of excessive lug plates, machined sleeves and pivot bushings.
FIGURE 4 is a front perspective view of the severe duty grapple with tubular pivot of the present invention.
FIGURE 5 is a rear perspective view of the present invention mounted on the dipper stick of a backhoe.
FIGURE 6 is a front perspective view of the improved grapple mounted on a dipper stick with its jaws wide open demonstrating the substantially closed throat area.
FIGURE 7 is a front perspective view of the present grapple mounted on the dipper stick with the jaws completely closed.
FIGURE 8 is a rear perspective view of the present grapple with all the respective mounting plates and only two lug plates.
FIGURE 9 is a exploded assembly view of the severe duty grapple of the present invention.
FIGURE 10 is a view of the second embodiment of the present severe duty grapple with the tubular pivot on the lower jaw as opposed to the upper jaw.

### DETAILED SPECIFICATION

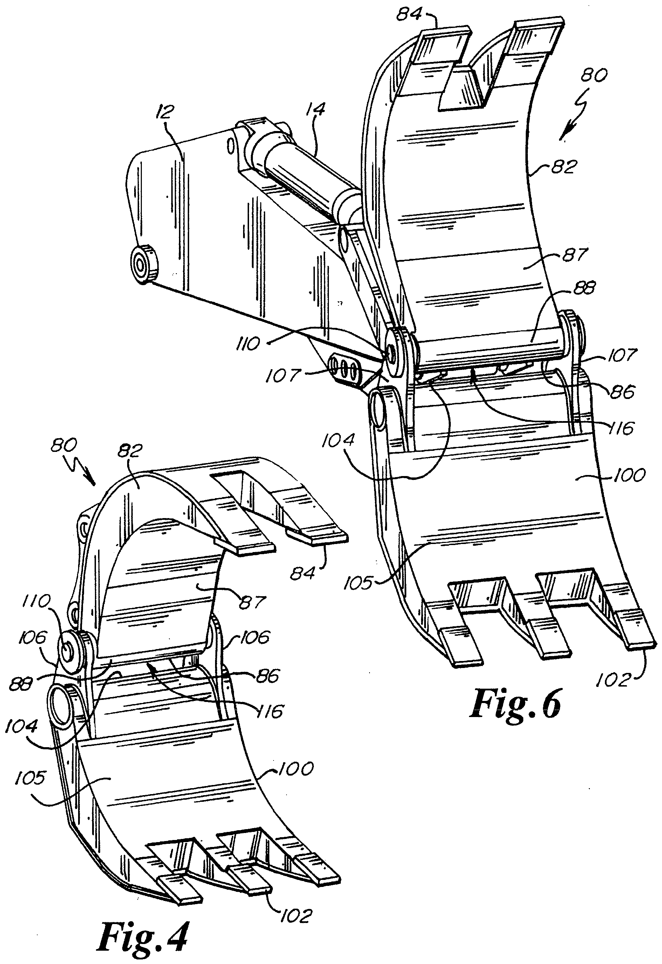

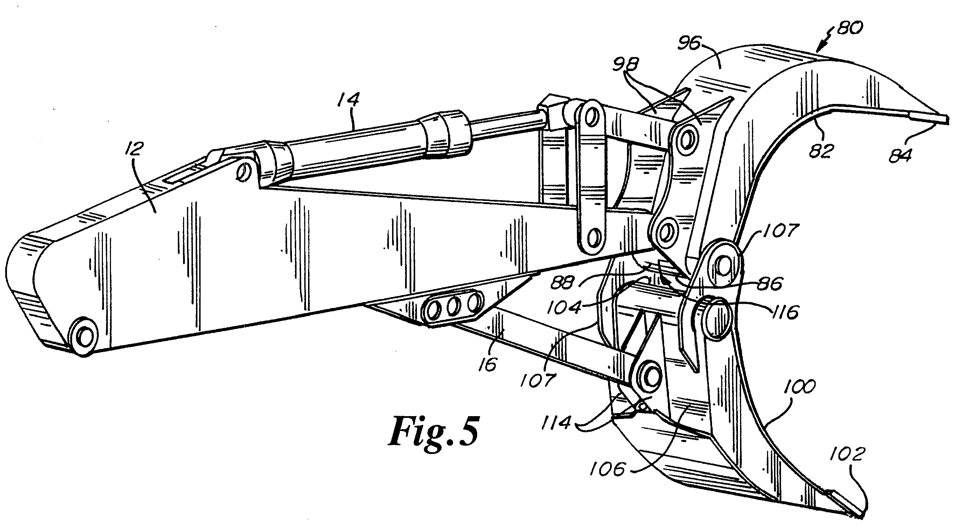

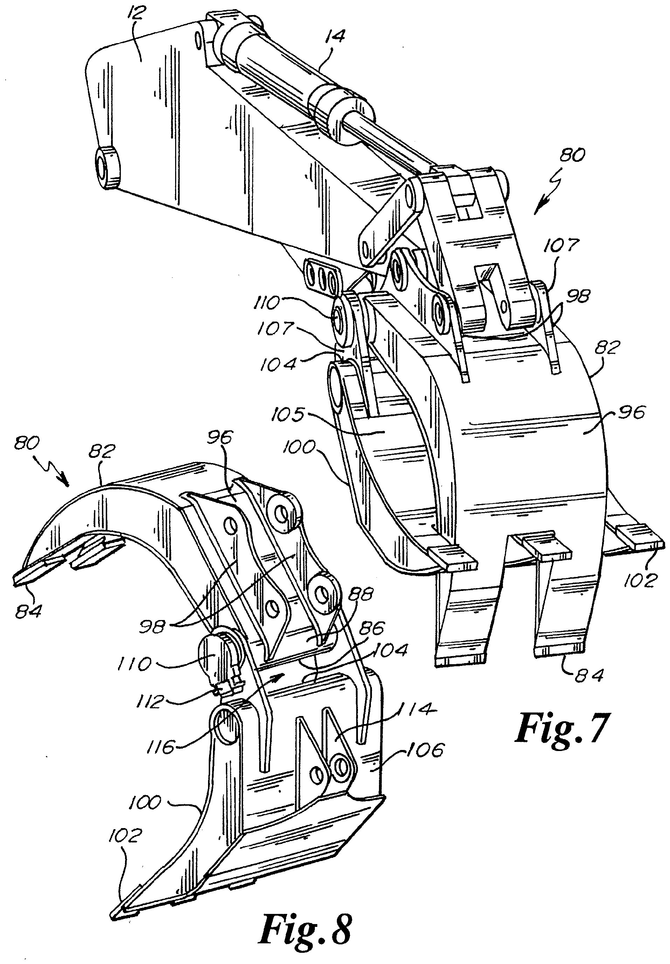

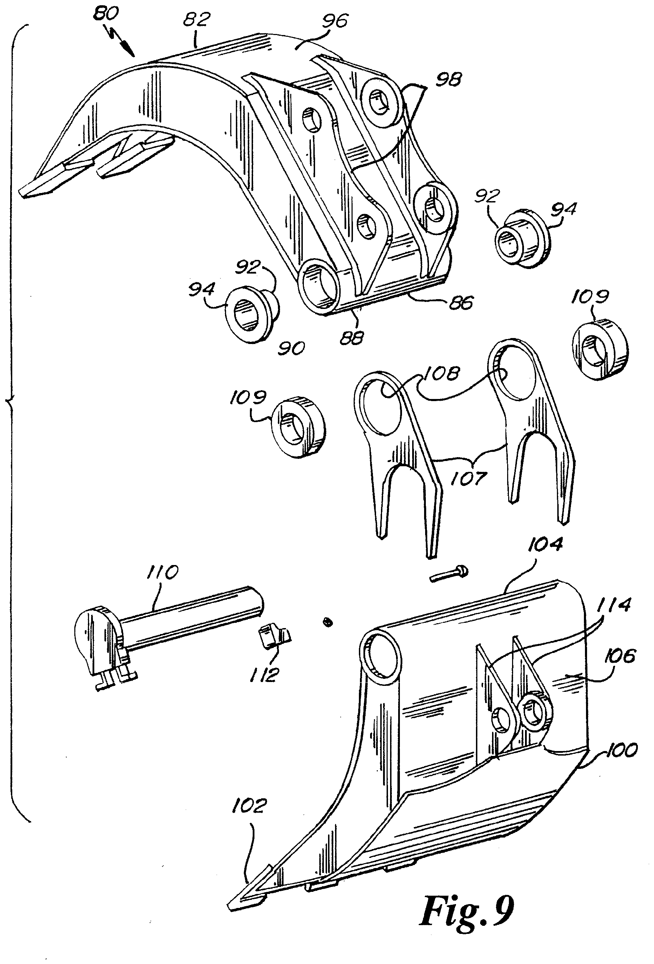

Referring to figures 4 through 9, the severe duty grapple 80 with tubular pivot 88 of the present invention may be understood.

The grapple 80 has an arcuate-shaped upper jaw or clam shell 82 with forward rake tips 84 and an inner end 86 between therewhich are load engaging plates 87. Adjacent the inner end 86 is welded the hollow tubular pivot 88 requiring no lug plates on the upper jaw 82. The tubular pivot 88 could be cylindrical or square in design.

The tubular pivot 88 has opened machined ends 90 which will received pivot bushings 92 each with an outer flange 94. Bushings 92 are suitably made of manganese and bronze. On the backside 96 of the upper jaw 82 are stick mount plates 98.

The arcuate-shaped lower jaw or clam shell 100 also suitably has outward rake tips 102 and an inner end 104 with load engaging plates 105 therebetween. The lower jaw 100 has a backside 106 with two lower lug plates 107 each with an eyelet 108. The lug plates are welded to the inner end 104 of the lower jaw. Machined sleeves 109 are suitably welded into eyelets 108. Pivot pin 110 suitably will pass through and eyelets 108 of the lug plates 107, the two pivot bushings 92 and the tubular pivot 88. The pivot pin 110 is suitably supported by the pivot bushing 92 again suitably made of manganese and bronze. A keeper arrangement 112 is suitably used to keep the pivot pin 110 in proper position. On the back side 106 of lower jaw 100 are stick mount plates 114.

Advantageously, the present invention has a substantially closed throat 116 which will not allow debris to readily get into contact with any pivot groups, linkages, the stick or cylinders that otherwise may cause harm to the grapple assembly 80 or stick 12. It will also be noted that the pivot bushings 92 with flanges 94 permit the upper jaw 82 and lower jaw 100 to not frictionally engage each other but rather together ride on the pivot bushings 92 and flanges 94 which easily may be replaced without substantial downtime and welding.

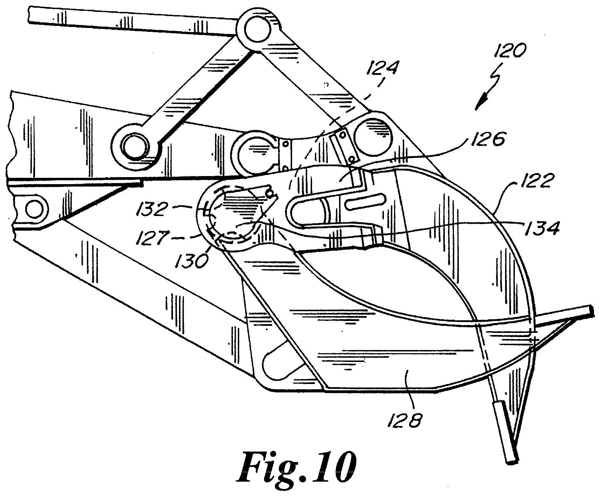

Referring to figure 10, the second embodiment of the severe duty grapple 120 is shown. The arcuate-shaped upper jaw 122 has an inner end 124 onto which are welded upper lug plates 126 each having eyelets 127. The arcuate-shaped lower jaw also has an inner end 130 suitably whereat is welded the hollow tubular pivot 132 which will receive a pivot pin 134 for assembly much like the first embodiment heavy duty grapple 80. The purpose of the second embodiment is to illustrate that the tubular pivot may go onto the inner end of either of the upper jaw or lower jaw.

The present invention is described above and shown in the figures for illustrative purposes only, the actual scope of the present invention is to be understood from a reading of the following claims.

### PREFERRED FEATURES OF THE INVENTION

1. An improved severe duty grapple for attachment onto the end of the dipper stick of a backhoe, comprising:
   a) an arcuate-shaped upper jaw with an inner end and a back side, the upper jaw pivotally attached near its inner end on its back side to the end of the dipper stick and a double action actuator for operative pivotal movement of the upper jaw relative to the dipper stick;
   b) an arcuate-shaped lower jaw with an inner end and a back side, the lower jaw attached near its inner end on its back side to the dipper stick by a linkage for operative pivotal movement of the upper jaw relative to the lower jaw;
   c) a hollow tubular pivot attached to the inner end of one of the jaws with open opposing ends, and two lug plates mounted on the inner end of the other jaw each with an eyelet, the eyelets alignable with the open ends of the tubular pivot; and
   d) a pivot pin passing through the tubular pivot and eyelets.
2. The improved severe duty grapple of clause 1 wherein the open opposing ends are machined and further comprising a pivot bushing with an external flange in each tubular pivot opening as to not let the upper and lower jaws rub together.
3. The improved severe duty grapple of clause 2, further comprising the bushing being made of manganese and bronze.
4. The improved severe duty grapple of clause 1, further comprising rake tips on each jaw opposite their respective inner ends.
5. The improved severe duty grapple of clause 4, further comprising load engaging plates between the inner ends and the rake tips of each jaw.
6. The improved severe duty grapple of clause 1, further comprising a closed throat between the inner ends of the upper and lower jaws.
7. The improved severe duty grapple of clause 1 wherein there are only two lug plates on the grapple.
8. The improved severe duty grapple of clause 1 wherein the linkage is a double action actuator for operative pivotal movement of the lower jaw relative to the backhoe stick.
9. An improved severe duty grapple for attachment onto the end of the dipper stick of a backhoe, comprising:
   a) an arcuate-shaped upper jaw with an inner end and a back side, the upper jaw pivotally attached near its inner end on its back side to the end of the dipper stick and a double action actuator for operative pivotal movement of the upper jaw relative to the dipper stick;
   b) an arcuate-shaped lower jaw with an inner end and a back side, the lower jaw attached near its inner end on its back side to the dipper stick by a linkage for operative pivotal movement of the upper jaw relative to the lower jaw;
   c) a hollow tubular pivot attached to the inner end of one of the jaws with open opposing machined ends, and two lug plates mounted on the inner end of the other jaw each with an eyelet, the eyelets alignable with the open ends of the tubular pivot;
   d) a pivot bushing with an external flange in each tubular pivot opening as to not let the upper and lower jaws rub together; and
   e) a pivot pin passing through the tubular pivot and eyelets.
10. The improved severe duty grapple of clause 9, further comprising the bushing being made of manganese and bronze.
11. The improved severe duty grapple of clause 9, further comprising rake tips on each jaw opposite their respective inner ends.
12. The improved severe duty grapple of clause 11 further comprising load engaging plates between the inner ends and the rake tips of each jaw.
13. The improved severe duty grapple of clause 9, further comprising a closed throat between the inner ends of the upper and lower jaws.
14. The improved severe duty grapple of clause 9 wherein there are only two lug plates on the grapple.
15. The improved severe duty grapple of clause 9 wherein the linkage is a double action actuator for operative pivotal movement of the lower jaw relative to the backhoe stick.
16. An improved severe duty grapple for attachment onto the end of the dipper stick of a backhoe, comprising:
   a) an arcuate-shaped upper jaw with an inner end and a back side, the upper jaw pivotally attached near its inner end on its back side to the end of the dipper stick and a double action actuator for operative pivotal movement of the upper jaw relative to the dipper stick;
   b) an arcuate-shaped lower jaw with an inner end and a back side, the lower jaw attached near its inner end on its back side to the dipper stick by a linkage for operative pivotal movement of the upper jaw relative to the lower jaw;
   c) rake tips on each jaw opposite their respective inner ends and load engaging plates between the inner ends and the rake tips of each jaw;
   d) a hollow tubular pivot attached to the inner end of the upper jaw with open opposing machined ends, and two lug plates mounted on the inner end of the lower jaw each with an eyelet alignable with one of open ends of the upper jaw tubular pivot;
   e) a pivot bushing with an external flange in each tubular pivot opening as to not let the upper and lower jaws rub together; and
   f) a pivot pin passing through the tubular pivot and eyelets forming a closed throat.
17. The improved severe duty grapple of clause 16, further comprising the bushing being made of brass and manganese.
18. The improved severe duty grapple of clause 16 wherein the linkage is a double action actuator for operative pivotal movement of the lower jaw relative to the backhoe stick.

## Claims

1. A severe duty grapple (80) for attachment to an end of a dipper stick (12) of a backhoe, the grapple having an arcuate upper jaw (82) and an arcuate lower jaw (100), the upper jaw (82) having an upper load engaging plate (87) and the lower jaw (100) having a lower load engaging plate (105), each of the jaws (82, 100) having an inner end (86, 104) and a first side and a second side, wherein first and second lugs (107), each having an eyelet (108), are fixed in spaced relation at the inner end (86, 104) of one of the upper or lower jaws (82, 100) **characterized in that**:
the other one of the upper or lower jaws (82, 100) includes a hollow tubular pivot (88) at its inner end (86, 104) disposed between and coaxial with the eyelets (108) of the first and second lugs (107);
a pivot pin (110) extending through the eyelets (108) of the first and second lugs (107) and through the hollow tubular pivot (88) such that the upper and lower jaws (82, 100) are pivotal with respect to one another about the pivot pin (110); and
whereby the inner end (86) of the upper jaw (82) and the inner end (104) of the lower jaw (100) are in proximity to one another, such that the inner ends (86, 104) together with the upper and lower load engaging plates (87, 105) define a closed throat (116) so debris is not allowed to enter between the upper and lower jaws (82, 100) which could damage the grapple during use.

2. A grapple according to claim 1, wherein first and second pivot bushings (92) are received in first and second ends (90), respectively, of the hollow tubular pivot (88), each of the pivot bushings (92) having an external flange (94).

3. A grapple according to claim 1 or 2, wherein machined sleeves (109) are fixed in the first and second eyelets (108).

4. A grapple according to claim 2, wherein the pivot bushings (92) are made of manganese and bronze.

5. A grapple according to any preceding claim, wherein the upper and lower jaws (82, 100) have rake tips (84, 102) opposite their respective inner ends (86, 104).

6. A grapple according to any preceding claim, wherein the upper jaw (82) is attachable proximate the inner end (86) on a back side (96) of the upper jaw (82) to the end of the dipper stick (12) for operative movement of the upper jaw (82) relative to the dipper stick (12) about the pivot pin (110).

7. A grapple according to any preceding claim, wherein the lower jaw (100) is attachable proximate the inner end (104) on a back side (106) of the lower jaw (100) to the dipper stick (12) by a linkage (16) for operative movement of the lower jaw (100) relative to the dipper stick (12) about the singular pivot pin (110).

## Patentansprüche

1. Schwerlastgreifer (80) zur Anbringung an ein Ende eines Löffelstiels (12) eines Tieflöffelbaggers, wobei der Greifer eine bogenförmige obere Backe (82) und eine bogenförmige untere Backe (100) aufweist, wobei die obere Backe (82) eine obere Lasteingriffsplatte (87) und die untere Backe (100) eine untere Lasteingriffsplatte (105) aufweist, wobei jede der Backen (82, 100) ein inneres Ende (86, 104) und eine erste Seite und eine zweite Seite aufweist, wobei erste und zweite Haltevorrichtungen (107), jeder mit einer Öse (108), in einer beabstandeten Beziehung am inneren Ende (86, 104) der oberen bzw. unteren Backen (82, 100) befestigt sind, **dadurch gekennzeichnet, dass**:
die andere der oberen oder unteren Backen (82, 100) eine hohle rohrförmige Achse (88) an ihrem inneren Ende (86, 104) einschließt, die zwischen und koaxial mit den Ösen (108) der ersten und zweiten Haltevorrichtungen (107) angeordnet ist;
sich ein Drehbolzen (110) durch die Ösen (108) der ersten und zweiten Haltevorrichtungen (107) und durch die hohle rohrförmige Achse (88) derart erstreckt, das die oberen und unteren Backen (82, 100) in Bezug zueinander als Drehpunkt um den Drehbolzen (110) dienend sind; und
demzufolge das innere Ende (86) der oberen Backe (82) und das innere Ende (104) der unteren Backe (100) in Nähe zueinander sind, derart, dass die inneren Enden (86, 104) zusammen mit den oberen und unteren Lasteingriffsplatten (87, 105) eine geschlossene Kehle (116) definieren, sodass keine Trümmer zwischen den oberen und unteren Backen (82, 100) eindringen, die den Greifer während des Gebrauchs beschädigen könnten.

2. Greifer nach Anspruch 1, wobei erste und zweite Drehbolzenbuchsen (92) in ersten bzw. zweiten Enden (90) der hohlen rohrförmigen Achse (88) aufgenommen werden, wobei jede der Drehbolzenbuchsen (92) einen äußeren Flansch (94) aufweist.

3. Greifer nach Anspruch 1 oder 2, wobei bearbeitete Hülsen (109) in den ersten und zweiten Ösen (108) befestigt sind.

4. Greifer nach Anspruch 2, wobei die Drehbolzenbuchsen (92) aus Mangan und Bronze hergestellt sind.

5. Greifer nach einem vorhergehenden Anspruch, wobei die oberen und unteren Backen (82, 100) Rechenzinken (84, 102) gegenüber ihren jeweiligen inneren Enden (86, 104) aufweisen.

6. Greifer nach einem vorhergehenden Anspruch, wobei die obere Backe (82) nahe dem inneren Ende (86) an einer Rückseite (96) der oberen Backe (82) an das Ende des Löffelstiels (12) anbringbar ist, um funktionsfähige Bewegung der oberen Backe (82) relativ zum Löffelstiel (12) um den Drehbolzen (110) zu bewirken.

7. Greifer nach einem vorhergehenden Anspruch, wobei die untere Backe (100) nahe dem inneren Ende (104) an einer Rückseite (106) der unteren Backe (100) an den Löffelstiel (12) durch ein Gestänge anbringbar ist, um funktionsfähige Bewegung der unteren Backe (100) relativ zum Löffelstiel (12) um den einzelnen Drehbolzen (110) zu bewirken.

## Revendications

1. Un grappin pour charges lourdes (80) destiné à être fixé à une extrémité d'un bras plongeur (12) d'une chargeuse-pelleteuse, le grappin ayant une mâchoire supérieure arquée (82) et une mâchoire inférieure arquée (100), la mâchoire supérieure (82) ayant une plaque d'enclenchement de charge supérieure (87) et la mâchoire inférieure (100) ayant une plaque d'enclenchement de charge inférieure (105), chacune des mâchoires (82, 100) ayant une extrémité intérieure (86, 104) et un premier côté et un deuxième côté, dans lequel des première et deuxième pattes (107), ayant chacune un oeillet (108), sont fixées dans une relation espacée à l'extrémité intérieure (86, 104) de l'une des mâchoires supérieure et inférieure (82, 100) **caractérisé en ce que** :
l'autre des mâchoires supérieure et inférieure (82, 100) inclut un pivot tubulaire creux (88) à son extrémité intérieure (86, 104) disposé entre et coaxial avec les oeillets (108) des première et deuxième pattes (107) ;
un axe de pivotement (110) s'étendant à travers les oeillets (108) des première et deuxième pattes (107) et à travers le pivot tubulaire creux (88) de telle sorte que les mâchoires supérieure et inférieure (82, 100) pivotent l'une par rapport à l'autre autour de l'axe de pivotement (110) ; et
grâce à quoi l'extrémité intérieure (86) de la mâchoire supérieure (82) et l'extrémité intérieure (104) de la mâchoire inférieure (100) sont à proximité l'une de l'autre, de telle sorte que les extrémité intérieures (86, 104) avec les plaques d'enclenchement de charge supérieure et inférieure (87, 105) définissent une gorge fermée (116) afin que des débris ne puissent pas pénétrer entre les mâchoires supérieure et inférieure (82, 100) ce qui pourrait endommager le grappin lors de l'utilisation.

2. Un grappin selon la revendication 1, dans lequel des premier et deuxième coussinets de pivotement (92) sont reçus respectivement dans des première et deuxième extrémités (90) du pivot tubulaire creux (88), chacun des coussinets de pivotement (92) ayant une bride extérieure (94).

3. Un grappin selon la revendication 1 ou 2, dans lequel des manchons usinés (109) sont fixés dans les premier et deuxième oeillets (108).

4. Un grappin selon la revendication 2, dans lequel les coussinets de pivotement (92) sont fabriqués en manganèse et bronze.

5. Un grappin selon l'une quelconque des revendications précédentes, dans lequel les mâchoires supérieure et inférieure (82, 100) ont des pointes de râteau (84, 102) à l'opposé de leurs extrémités intérieures respectives (86, 104).

6. Un grappin selon l'une quelconque des revendications précédentes, dans lequel la mâchoire supérieure (82) peut être attachée à proximité de l'extrémité intérieure (86) sur une face arrière (96) de la mâchoire supérieure (82) à l'extrémité du bras plongeur (12) pour un mouvement fonctionnel de la mâchoire supérieure (82) par rapport au bras plongeur (12) autour de l'axe de pivotement (110).

7. Un grappin selon l'une quelconque des revendications précédentes, dans lequel la mâchoire inférieure (100) peut être attachée à proximité de l'extrémité intérieure (104) sur une face arrière (106) de la mâchoire inférieure (100) au bras plongeur (12) par une tringlerie (16) pour un mouvement fonctionnel de la mâchoire inférieure (100) par rapport au bras plongeur (12) autour de l'axe de pivotement unique (110).
